# Europäisches Patentamt
## European Patent Office
## Office européen des brevets

(19)

(11) Numéro de publication : **0 152 708 B1**

(12) # FASCICULE DE BREVET EUROPÉEN

(45) Date de publication du fascicule du brevet :
**02.03.88**

(51) Int. Cl.⁴ : **G 09 G 3/36**, G 02 F 1/13

(21) Numéro de dépôt : **84402397.8**

(22) Date de dépôt : **23.11.84**

(54) **Procédé de commande d'un dispositif de visualisation à accès matriciel, et dispositif de visualisation utilisant ce procédé.**

(30) Priorité : **29.11.83 FR 8319022**

(43) Date de publication de la demande :
**28.08.85 Bulletin 85/35**

(45) Mention de la délivrance du brevet :
**02.03.88 Bulletin 88/09**

(84) Etats contractants désignés :
**DE GB IT NL**

(56) Documents cités :
**EP-A- 0 055 153
1982 SID INTERNATIONAL SYMPOSIUM, DIGEST OF
TECHNICAL PAPERS, 1ère édition, mai 1982, pages
238,239, Lewis Winner, Coral Cables, Florida, US;
SUN LU et al.: "Thermally-addressed pleochroic dye
switching liquid crystal display"**

(73) Titulaire : **THOMSON-CSF
173, Boulevard Haussmann
F-75379 Paris Cedex 08 (FR)**

(72) Inventeur : **Hehlen, Robert
THOMSON-CSF SCPI 173, bld Haussmann
F-75379 Paris Cedex 08 (FR)**
Inventeur : **Hareng, Michel
THOMSON-CSF SCPI 173, bld Haussmann
F-75379 Paris Cedex 08 (FR)**
Inventeur : **Le Berre, Serge
THOMSON-CSF SCPI 173, bld Haussmann
F-75379 Paris Cedex 08 (FR)**
Inventeur : **Mourey, Bruno
THOMSON-CSF SCPI 173, bld Haussmann
F-75379 Paris Cedex 08 (FR)**

(74) Mandataire : **Lepercque, Jean et al
THOMSON-CSF SCPI 19, avenue de Messine
F-75008 Paris (FR)**

EP 0 152 708 B1

Jouve, 18, rue St-Denis, 75001 Paris, France

## Description

La présente invention concerne un procédé de commande d'un dispositif de visualisation comprenant une couche de matériau actif réagissant à un effet mixte thermique et électrique. Elle concerne plus particulièrement la commande de dispositifs à cristal liquide smectique du type à adressage matriciel.

Les dispositifs de visualisation à cristal liquide smectique ont fait l'objet de nombreuses études et publications. En particulier, les dispositifs du type à adressage matriciel se sont imposés dans beaucoup d'applications. L'adressage s'effectue en deux temps : d'abord la zone de cristal liquide à adresser est portée à une température correspondant à la phase isotrope, puis lors de son refroidissement, cette zone est soumise à un champ électrique dont l'amplitude est fonction de l'information à inscrire, ce champ intervenant sur les qualités optiques de la zone concernée. On trouvera une description d'un tel dispositif dans la demande de brevet européen n° 0 055 153 déposée le 24 novembre 1981 qui fournit notamment des circuits de commande permettant de simplifier la commande du dispositif.

En général, l'adressage matriciel est réalisé par l'intermédiaire de deux réseaux croisés d'électrodes emprisonnant une couche de matériau électrooptique et les champs électriques de commande sont créés par l'application de tensions aux bornes de ces réseaux d'électrodes. On sait que les cristaux liquides, d'une façon générale, supportent mieux les tensions alternatives que les tensions continues, ces dernières ayant entre autre, une mauvaise influence sur leur durée de vie. C'est pour cette raison que les dispositifs à cristal liquide nématique sont commandés généralement par des tensions alternatives. Si les cristaux liquides smectiques sont moins sensibles à la composante continue d'une tension électrique de commande, il n'en est pas moins vrai que leur durée de vie est grandement améliorée par une commande alternative dépourvue de composante continue. On peut en conclure qu'il est préférable que les tensions de commandes des dispositifs à cristaux liquides smectiques soient des tensions alternatives. Cependant, le fait d'adresser thermiquement l'un des réseaux d'électrodes complique l'adressage alternatif de la matrice. En effet, chaque électrode chauffante de la matrice reçoit séquentiellement une impulsion de chauffage pendant une durée déterminée et joue le rôle d'élément résistif dont une extrémité est reliée à la masse du dispositif. Or, pour des questions d'isolement électrique des transistors des circuits de commande vidéo, il est préférable que les électrodes chauffantes puissent recevoir des potentiels, correspondant à des tensions vidéo, différents de zéro en alternance avec des potentiels nuls. Ceci n'est pas possible avec les dispositifs connus dans lesquels les électrodes chauffantes ont l'une de leurs extrémités à la masse.

Afin de pallier cet inconvénient, l'invention propose un procédé de commande d'un dispositif de visualisation dans lequel le champ électrique de commande de la couche de matériau électrooptique est engendré à partir d'une tension continue transformée en tension alternative par commutation des potentiels des électrodes d'application du champ électrique de commande. Une configuration particulière du dispositif de visualisation ou un système de commutation électronique permet la mise en œuvre du procédé.

L'invention a donc pour objet un procédé de commande d'un dispositif de visualisation comprenant une couche de matériau actif réagissant à un effet mixte thermique et électrique, le dispositif comportant un premier et un second réseau d'électrodes, ces réseaux étant croisés pour permettre un adressage matriciel du dispositif, les électrodes du premier réseau permettant de chauffer successivement des zones de ladite couche, des champs électriques de commande étant appliqués auxdites zones lors de leur refroidissement pendant une durée prédéterminée par des électrodes encadrant ladite couche, lesdits champs électriques étant engendrés à partir de tensions continues de commande dites tensions vidéo, caractérisé en ce que :

les tensions vidéo de commande sont distribuées par les électrodes d'encadrement constituées d'une part par le premier réseau d'électrodes et d'autre part par le second réseau d'électrodes ;

les valeurs des tensions vidéo peuvent varier de 0 à une valeur maximale Vv ;

les sens desdits champs électriques de commande sont inversés en portant :

• pendant le temps d'une alternance, le potentiel de l'électrode chauffante d'une zone à adresser à 0, tandis que les électrodes du second réseau sont portées aux potentiels correspondant auxdites tensions vidéo ;

• pendant le temps de l'autre alternance, le potentiel de ladite électrode chauffante à la valeur maximale Vv tandis que les électrodes du second réseau sont portées à des potentiels complémentaires par rapport à Vv de ceux de l'alternance précédente ; ce qui permet de supprimer toute composante continue des champs électriques appliqués à ladite couche en portant les électrodes d'application desdits champs à des potentiesl tels que lesdits champs électriques de commande sont alternativement dirigés dans un sens puis dans le sens opposé.

L'invention concerne également un autre procédé de commande d'un dispositif de visualisation comprenant une couche de matériau actif réagissant à un effet mixte thermique et électrique, le dispositif comportant un premier et un second réseau d'électrodes, ces réseaux étant croisés pour permettre un adressage matriciel du dispositif, les électrodes du premier réseau permettant de chauffer successivement des zones de ladite couche, des champs électriques de commande étant appliqués auxdites zones lors de leur refroidissement pendant une durée prédéterminées par des électrodes encadrant ladite couche, lesdits champs électriques étant engendrés à partir de tensions continues de commande dites tensions vidéo, caractérisé en ce que :

les tensions vidéo de commande sont distribuées par les électrodes d'encadrement constituées d'une part par une contre-électrode et d'autre part par le second réseau d'électrodes ;

les valeurs des tensions vidéo pouvant varier de 0 à une valeur maximale Vv ;

les sens desdits champs électriques de commande sont inversés en portant :

• pendant le temps d'une alternance, le potentiel de ladite contre-électrode 0, tandis que les électrodes du second réseau (24) sont portées aux potentiels correspondants auxdites tensions vidéo ;

• pendant le temps de l'autre alternance, le potentiel de ladite contre-électrode à la valeur maximale Vv, tandis que les électrodes du second réseau sont portées à des potentiels complémentaires par rapport à Vv de ceux de l'alternance précédente ; ce qui permet de supprimer toute composante continue des champs électriques appliqués à ladite couche, les électrodes d'application desdits champs sont portées à des potentiels tels que lesdits champs électriques de commande sont alternativement dirigés dans un sens puis dans le sens opposé.

L'invention a aussi pour objet un dispositif de visualisation du type à adressage matriciel selon la revendication 5.

L'invention sera mieux comprise et d'autres avantages apparaîtront au moyen de la description qui va suivre et des figures annexées parmi lesquelles :

la figure 1 est un diagramme explicatif ;

la figure 2 est un schéma électrique équivalent ;

les figures 3 et 4 sont des diagrammes explicatifs ;

les figures 5, 6 et 7 sont des schémas électriques illustratifs du procédé selon l'invention ;

la figure 8 est un exemple de dispositif de mise en œuvre du procédé de commande selon l'invention ;

la figure 9 est une vue partielle en coupe d'un écran de visualisation ;

la figure 10 est une illustration de la manière d'appliquer des tensions de commande, selon l'invention.

Il existe deux possibilités pour appliquer une différence de potentiel alternative à une couche de matériau électrooptique comprise entre deux électrodes.

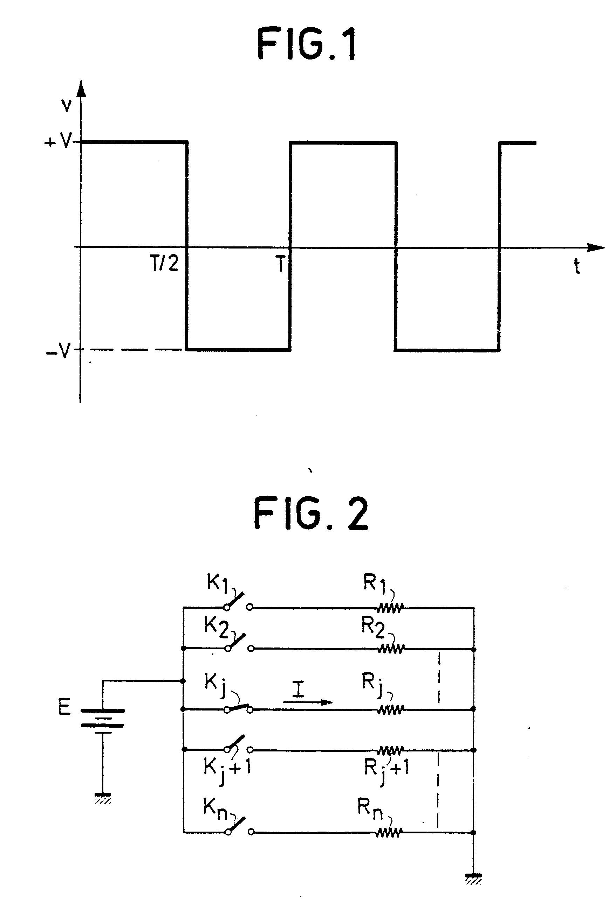

On peut maintenir l'une des électrodes à un potentiel fixe, par exemple le potentiel de la masse, et faire varier le potentiel de l'autre électrode de part et d'autre du potentiel de la masse. La figure 1 est un diagramme qui donne l'allure de la tension v à laquelle est soumise une couche de matériau électrooptique, par rapport au temps t. La tension v est alternative, de période T. Elle est égale à + V sur une demi-période et à — V sur la demi-période suivante. La couche de matériau comprise entre les électrodes d'application de la tension v est, quelle que soit la demi-période considérée, toujours soumise à une tension d'amplitude V. Cette disposition est commode d'un point de vue de réalisation pratique du dispositif mais elle a pour conséquence que les transistors des circuits de commande vidéo doivent supporter un isolement électrique égal à 2 V. L'amplitude V étant généralement comprise entre 15 et 30 volts, les transistors de sortie doivent supporter entre 30 et 60 volts. Ceci impose un choix de la technologie à employer pour réaliser les circuits de commande, ce qui se répercute sur la qualité de l'intégration de ces circuits.

Une autre façon d'appliquer une différence de potentiel alternative à la couche de matériau électrooptique consiste à alterner les potentiels sur chaque électrode. Pour la durée d'une demi-période, l'une des électrodes sera au potentiel V et l'autre à zéro ; durant la demi-période suivante, ce sera l'inverse. Dans ces conditions, le matériau électrooptique est toujours soumis à une tension d'amplitude V mais les transistors des circuits de commande ne doivent plus supporter qu'une tension d'isolement V. Ceci a pour conséquence la possibilité d'employer une technologie de fabrication des transistors qui se prête particulièrement bien à l'intégration. C'est cette solution qui est employée pour l'adressage des dispositifs à cristaux liquides nématiques. La transposition de cette solution aux dispositifs à accès mixte thermique et électrique ne peut pas s'appliquer d'emblée. En effet, ces dispositifs comportent généralement un réseau d'électrodes chauffantes, qui possèdent toutes une extrémité reliée à la masse et par conséquent un potentiel fixé une fois pour toutes.

La figure 2 est un schéma électrique représentant un réseau d'électrodes chauffantes et leurs moyens de chauffage. Ces électrodes, symbolisées par leurs résistances $R_1$ à $R_n$, constituent l'un des réseaux d'électrodes contribuant à l'adressage matriciel d'un écran de visualisation à cristal liquide smectique classique. Ce sont par exemple les connexions de lignes de la matrice, les tensions vidéo étant distribuées par les connexions de colonnes non représentées. Les moyens de chauffage des électrodes chauffantes sont constituées par un générateur de tension E et des interrupteurs $K_1$ à $K_n$ qui seront dans la pratique des transistors fonctionnant en tout ou rien. L'élévation de température d'une électrode chauffante est provoquée par effet Joule lorsque l'interrupteur correspondant est fermé. Ainsi qu'il est bien connu, ces électrodes sont séquentiellement portées à une température telle qu'elle assure le changement de phase de la zone de cristal liquide située en vis-à-vis. Lorsque c'est le tour de l'électrode de rang j (désignée par sa résistance $R_j$) à être chauffée, l'interrupteur $K_j$ se ferme et le générateur de tension E délivre un courant de chauffage I dans $R_j$, tous les autres interrupteurs $K_1$ à $K_n$ étant ouverts.

L'écran pouvant comporter un nombre élevé d'électrodes chauffantes (plusieurs centaines), il est

3

avantageux de réunir leurs extrémités opposés aux interrupteurs à la masse. Le temps de chauffage $\tau$ étant très court, chaque électrode est soumise en fait à une impulsion de tension. Les tensions vidéo correspondant à la ligne chauffée de rang j sont appliquées par l'intermédiaire des connexions de colonnes juste après l'impulsion de chauffage et pendant un temps $\tau'$ généralement choisi égal à $\tau$. L'application des tensions de commande vidéo s'effectue au moyen de la connexion de ligne de rang j et des connexions de colonnes par l'intermédiaire de la masse qui assure la continuité électrique. Dans ce dispositif de l'art connu, les tensions de commande vidéo sont également fournies sous forme d'impulsions. Elles ont la même durée mais leurs amplitudes varient selon le degré de contraste désiré d'une valeur nulle à une valeur maximale Vv. Comme elles ont toutes le même signe, la couche de cristal liquide est toujours soumise à une composante continue néfaste.

L'invention se propose d'éliminer cette composante continue en rendant alternative, pour la couche de matériau électrooptique, les tensions de commande vidéo. Deux cas peuvent se produire : les impulsions de chauffage se succèdent dans le temps soit de manière immédiate (elles sont jointives), soit avec un décalage temporel (elles sont non jointives).

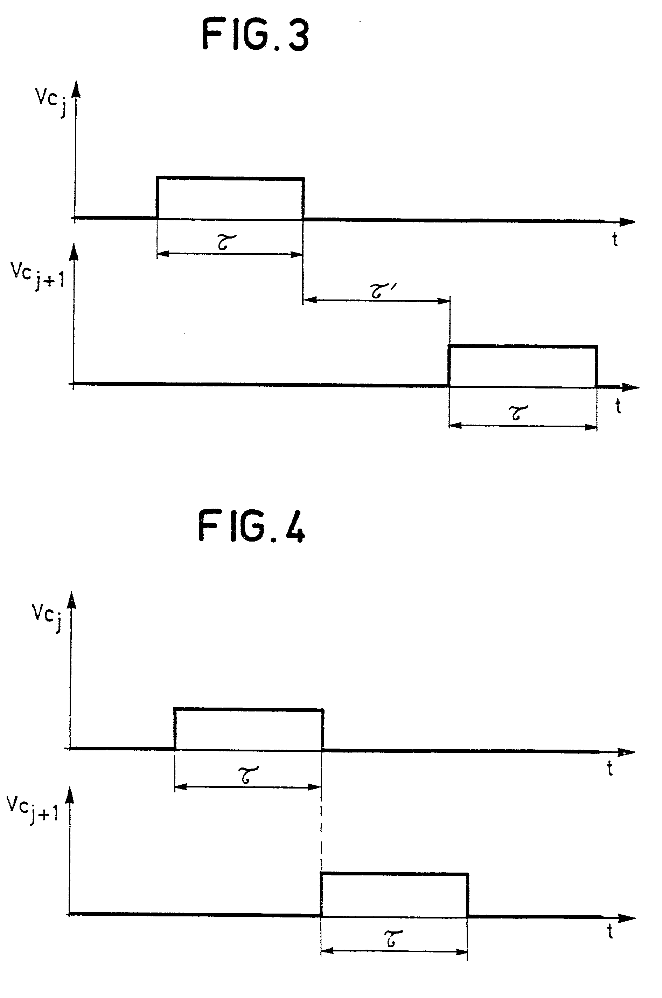

Les impulsions de chauffage ne sont pas jointives, notamment, lorsque l'écran est de grande dimension, à lecture directe et que la durée $\tau$ de l'impulsion de chauffage est supérieure à 1 milliseconde. L'image n'est pas rafraîchie et il existe un effet mémoire. Dans cette configuration, les tensions vidéo sont appliquées juste après l'impulsion de chauffage. C'est ce que représente la figure 3 qui est un diagramme comparatif de la succession des impulsions de chauffage en fonction du temps. On a représenté les impulsions de chauffage pour deux électrodes chauffantes consécutives qui ont rang j et j + 1. La tension $Vc_j$ représente l'impulsion de chauffage de la ligne j ; la tension $Vc_j + _1$ représente l'impulsion de chauffage de la ligne j + 1. Elles ont la même durée $\tau$. Entre la fin de la première impulsion et le début de la seconde s'est écoulé un temps $\tau'$ qui est généralement choisi égal à $\tau$. C'est pendant ce temps $\tau'$ que les tensions vidéo correspondant à la ligne j, qui vient d'être chauffée, seront appliquées.

Les impulsions de chauffage sont jointives, notamment, lorsque l'écran est de petite dimension, l'image étant projetée, et que la durée de l'impulsion de chauffage $\tau$ est inférieure ou égale à 64 microsecondes, ce qui correspond à un accès thermique à cadence télévision. L'image est alors rafraîchie. Les tensions de commande vidéo sont appliquées à la ligne j pendant que la ligne j + 1 est chauffée. C'est ce que représente le diagramme de la figure 4.

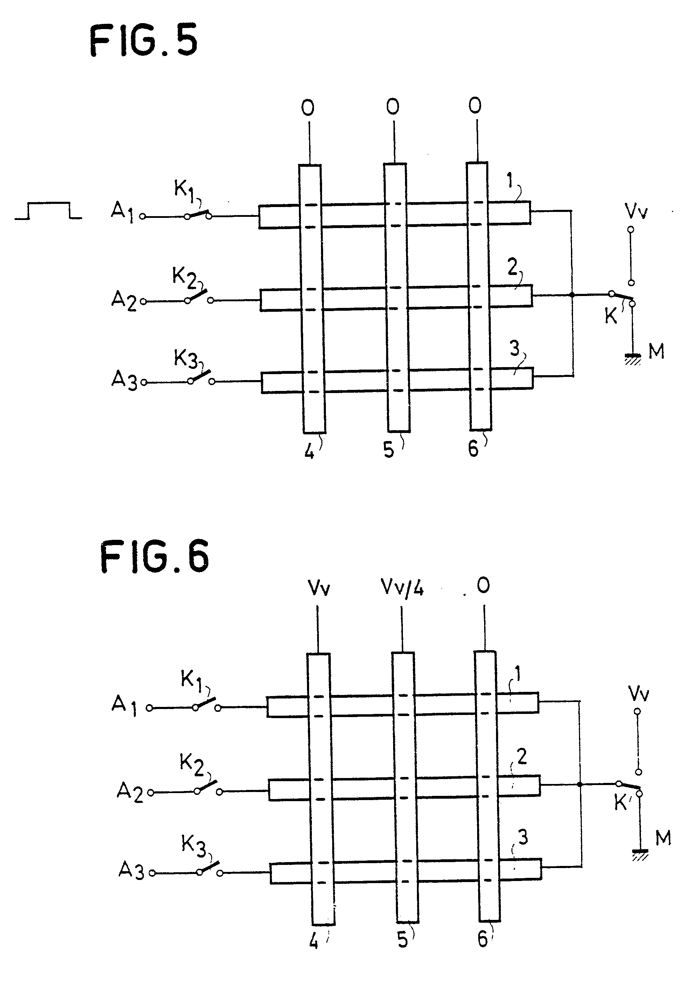

Lorsque les impulsions ne sont pas jointives, il est possible de modifier la référence du réseau d'électrodes chauffantes, c'est-à-dire le réseau des connexions de lignes dans l'exemple d'application choisi plus haut, pendant le temps d'application des tensions de commande vidéo. Le temps d'application des tensions vidéo est par exemple $\tau'$ comme défini à la figure 3. Dans ce cas, les potentiels des tensions vidéo sont appliqués aux connexions de colonnes juste après l'impulsion de chauffage pendant $\tau'/2$, la connexion de ligne correspondante étant au potentiel de la masse. Ensuite, pendant le temps $\tau'/2$ restant, les potentiels seront modifiés de façon à complémenter les potentiels appliqués pendant la première période $\tau'/2$. Ces considérations vont être explicitées en détail au moyen des figures 5, 6 et 7.

La figure 5 représente deux réseaux croisés d'électrodes du type entrant dans la composition d'un écran de visualisation à adressage matriciel ainsi que des éléments annexes servant à leur adressage. Pour ne pas compliquer la figure, on a représenté des réseaux d'électrodes ne comportant que trois connexions de lignes 1, 2 et 3 et trois connexions de colonnes 4, 5 et 6. Les connexions de lignes ont été choisies comme électrodes chauffantes. Elles peuvent être adressées thermiquement par l'intermédiaire des interrupteurs $K_1$, $K_2$ et $K_3$, qui symbolisent des composants électroniques du type transistor, et par l'interrupteur K. La figure 5 montre l'adressage thermique de la connexion de ligne 1. L'interrupteur $K_1$ étant fermé et l'interrupteur K mettant le circuit à la masse M, une impulsion de tension d'amplitude $Vc_1$ et de largeur $\tau$ apparaissant entre les points $A_1$ et M provoque l'échauffement de l'électrode 1 et de la partie de la couche de matériau électrooptique située entre les deux réseaux et en vis-à-vis et non représentée sur la figure. Les interrupteurs $K_2$ et $K_3$ étant ouverts, les électrodes 2 et 3 ne sont pas adressées thermiquement. On remarque également que les potentiels des connexions de colonnes sont nuls et que le potentiel Vv, défini précédemment, n'affecte pas le connexions de lignes à cause de la position de l'interrupteur K. Il n'y a donc aucune tension de commande vidéo appliquée à la couche de matériau électrooptique.

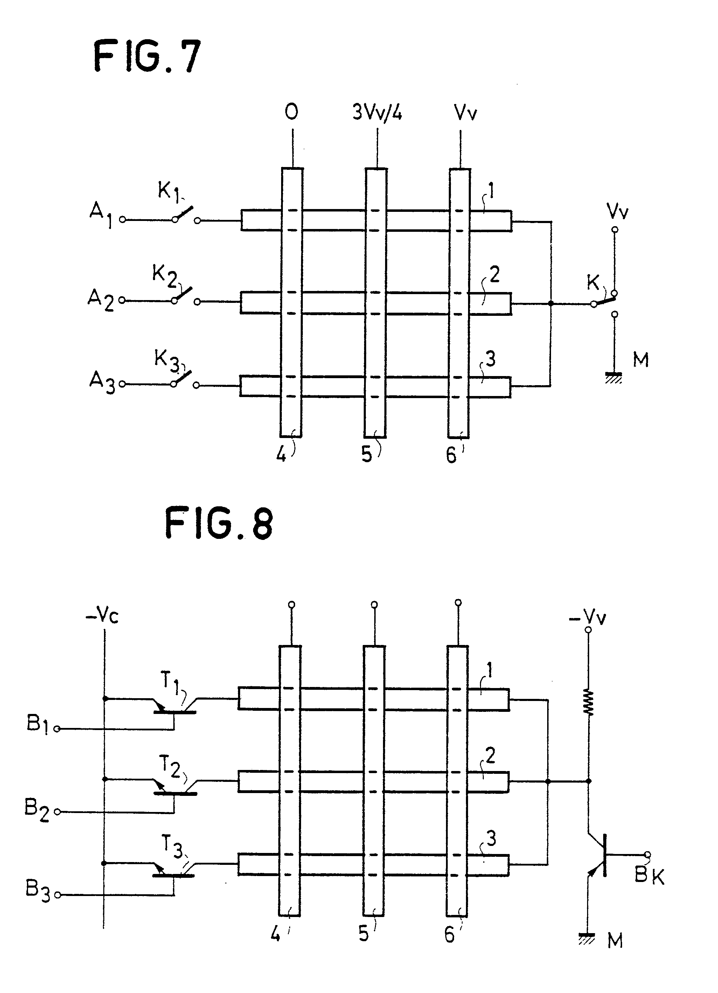

Lorsque l'impulsion de tension de chauffage de l'électrode 1 est terminée, il existe un temps $\tau'$ pendant lequel aucune autre électrode n'est chauffée et pendant lequel les tensions vidéo vont être appliquées. Les figures 6 et 7 sont illustratives de cette manière d'agir. Sur la figure 6, les interrupteurs $K_1$, $K_2$ et $K_3$ sont ouverts et l'interrupteur K est laissé dans la même position que précédemment. Les éléments d'image correspondant aux intersections de la connexion de ligne 1 et des connexions de colonnes 4, 5 et 6 sont adressés par des tensions de commande vidéo dont des valeurs prises au hasard sont mentionnées sur la figure 6. On constante donc que l'élément d'image constitué par l'intersection de électrodes 1 et 4 est soumis à une différence de potentiel égale à Vv. La différence de potentiel entre les électrodes 1 et 5 est égale à Vv/4. Celle existant entre les électrodes 1 et 6 est nulle. Ces potentiels sont maintenus pendant le temps $\tau'/2$.

Au bout de ce temps $\tau'/2$, l'interrupteur K est actionné dans l'autre sens comme l'indique la figure 7 ce qui a pour conséquence de porter les connexions de lignes au potentiel Vv. En même temps, les potentiels présents sur les connexions de colonnes sont complémentés par rapport à Vv comme il est indiqué à la figure 7. Chaque élément d'image constitué par les intersections de l'électrode 1 et des électrodes 4, 5 et 6 est donc soumis à la même différence de potenteil que dans le cas de la figure 6 mais affectée d'un signe opposé.

La complémentarité des tensions vidéo peut être réalisée d'une manière relativement simple. On peut par exemple intercaler entre l'étage délivrant ces tensions et les connexions de colonnes un étage de complémentarité qui fonctionne de la manière suivante :

pendant la première demi-période $\tau/2$, cet étage est transparent d'un point de vue électrique et les tensions vidéo sont directement appliquées aux connexions de colonnes correspondantes (cas de la figure 6), ceci jusqu'à la fin de cette première demi-période où les tensions vidéo sont dirigées par une simple commutation électronique vers le circuit de complémentarité proprement dit,

pendant la seconde demi-période $\tau'/2$, chaque tension vidéo est envoyée par exemple à l'une des deux entrées d'un circuit soustracteur classique à amplificateur opérationnel qui reçoit sur sa seconde entrée la tension Vv, de manière à obtenir un signal de sortie complémentaire par rapport à Vv de la tension vidéo (cas de la figure 7).

Une fois que la période $\tau'$ est terminée, on procédera de la même façon pour les connexions de lignes 2 et 3 au moyen des interrupteurs $K_2$ et $K_3$. L'impulsion de chauffage est alors appliquée, suivant les cas, entre $A_2$ et M ou entre $A_3$ et M. On voit que cette manière de procéder permet d'annuler la composante continue qui existait précédemment dans les dispositifs de l'art connu, que ce soit pour des signaux saturés ou pour des signaux d'amplitude variable.

Il existe de nombreuses possibilités pour réaliser la commande par un procédé selon l'invention. La figure 8 montre un exemple de réalisation possible. Elle reprend le réseau matriciel des trois figures précédentes où les mêmes références désignent les mêmes éléments. Les transistors $T_1$, $T_2$ et $T_3$ assurent les fonctions des interrupteurs $K_1$, $K_2$ et $K_3$. Il en va de même pour le transistor $T_K$ par rapport à l'interrupteur K. Pour adresser la première ligne, il faut tout d'abord chauffer par effet Joule l'électrode 1 pendant le temps $\tau$. Pour cela, on provoque la conduction du transistor $T_1$ par application sur sa base $B_1$ d'une impulsion de tension de durée $\tau$ qui provoque sa conduction. En même temps, une impulsion de tension est appliquée sur la base $B_K$ du transistor $T_K$ pour le saturer. L'électrode 1 est donc traversée par un courant de chauffage pendant le temps $\tau$ tandis que les électrodes 2 et 3 ne sont traversées par aucun courant puisque $T_2$ et $T_3$ sont toujours bloqués. Au bout du temps $\tau$, $T_1$ est bloqué, $T_K$ est toujours conducteur puisque l'impulsion de tension sur sa base est encore présente pendant $\tau'/2$ et les tensions de commande vidéo sont appliquées. Ces tensions vidéo sont appliquées sous la forme de potentiels sur les électrodes de colonnes et par le maintien au potentiel de la masse des électrodes de lignes. Lorsque cette première période $\tau'/2$ est terminée, l'impulsion de tension présente en $B_K$ s'achève pour une seconde période $\tau'/2$ et le transistor $T_K$ se bloque mettant les électrodes de lignes au potentiel — Vv. Au même moment, chaque électrode de colonne est portée à un potentiel qui est le complément par rapport à — Vv du potentiel présent sur ladite colonne pendant la première période $\tau'/2$. L'affichage de la première ligne étant terminée, on peut de la même manière afficher la seconde ligne puis la troisième.

Lorsque les impulsions de chauffage sont jointives, la manière de procéder qui vient d'être décrite s'applique difficilement. En effet, il est très difficile de porter une électrode chauffante à un potentiel Vv afin de complémenter les informations vidéo et de chauffer par effet Joule la même électrode. Il est nécessaire dans ce cas, d'utiliser une autre configuration pour réaliser les dispositifs à effet mixte thermique et électrique.

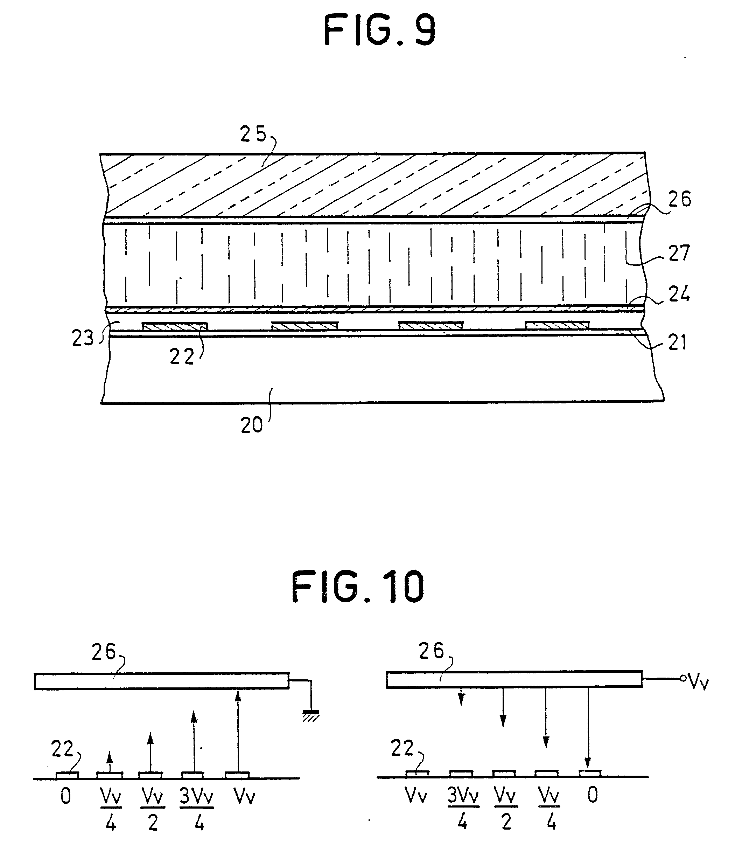

La figure 9 représente un dispositif de visualisation utilisant une couche de matériau réagissant à un effet mixte thermique et électrique, et qui peut être utilisé pour mettre en œuvre le procédé de commande selon l'invention. La figure 9 est une vue partielle en coupe et décrit, à titre non limitatif, un écran de visualisation à cristal liquide smectique du type à adressage matriciel. On distingue un substrat 20, par exemple en silicium monocristallin, recouvert d'une couche isolante 21 qui peut être de l'oxyde de silicium $SiO_2$. Sur la couche 21 on a déposé un premier réseau d'électrodes 22 destinées à jouer le rôle d'électrodes chauffantes. Il est alors avantageux de les réaliser en aluminium. Les électrodes 22, qui sont par exemple les connexions de lignes de la matrice de visualisation, sont noyées dans une couche d'isolant 23, par exemple en nitrure de silicium, laquelle supporte le second réseau de la matrice formant les connexions de colonnes. Celles-ci sont constituées par des électrodes 24 en matériau réfléchissant tel que l'aluminium. Une lame de verre 25 est maintenue, par des cales d'épaisseur non représentées, à une distance d'environ 12 micromètres du réseau d'électrodes 24. Elle supporte une contre-électrode 26 qui s'étend sur toute la partie active de l'écran. La contre-électrode 26 est nécessairement transparente. Elle est par exemple réalisée en oxyde mixte d'étain et d'indium. Dans l'espace défini par les cales, on introduit une couche de cristal liquide 27 possédant une phase smectique. Dans cette configuration, les électrodes chauffantes ne servent plus de plan de référence pour l'application du champ électrique de commande vidéo qui est appliqué entre les connexions de colonnes 24 et la contre-électrode 26. Avec le dispositif de la figure 9, le potentiel de la contre-électrode peut sans problème être le potentiel de la masse pendant la moitié du temps d'application de la tension de commande vidéo et pendant l'autre moitié de ce temps le potentiel Vv. C'est ce qui est représenté sur la figure 10.

La figure 10 représente schématiquement un exemple d'application des tensions de commande vidéo. La partie gauche de la figure est relative à la première alternance du signal vidéo et la partie droite

5

à la deuxième alternance de ce signal. Pour plus de simplicité, on n'a représenté dans cette figure que les éléments directement concernés, c'est-à-dire la contre-électrode 26 et les connexions de colonnes 22. La répartition des potentiels est la suivante pour la première alternance du signal vidéo : la contre-électrode 26 est à la masse, les connexions de colonnes 22 se voient attribuer des potentiels croissant régulièrement de 0 à Vv (tension maximale applicable). A la seconde alternance du signal vidéo, c'est la contre-électrode 26 qui est soumise au potentiel Vv tandis que les connexions de colonnes sont mises à des potentiels complémentaires par rapport à Vv comme il est indiqué sur la figure. Plutôt que de rendre la tension vidéo alternative après chaque chauffage de ligne, on peut aussi inverser la tension vidéo au rythme de la trame ou de l'image si on admet que l'affichage n'est pas sensiblement modifié d'une image à l'autre. On peut également remarquer que l'écran de visualisation représenté à la figure 9 est également utilisable lorsque les impulsions de chauffage ne sont pas jointives.

Le procédé de commande selon l'invention est donc utilisable dans tous les cas où l'on ne désire pas qu'une tension continue soit appliquée en permanence à une couche de matériau électrooptique, en particulier lorsqu'il s'agit d'une couche de cristal liquide smectique.

**Revendications**

1. Procédé de commande d'un dispositif de visualisation comprenant une couche de matériau actif (27) réagissant à un effet mixte thermique et électrique, le dispositif comportant un premier et un second réseau d'électrodes (1 à 3 et 4 à 6), ces réseaux étant croisés pour permettre un adressage matriciel du dispositif, les électrodes (1 à 3) du premier réseau permettant de chauffer successivement des zones de ladite couche, des champs électriques de commande étant appliqués auxdites zones lors de leur refroidissement pendant une durée prédéterminée ($\tau'$) par des électrodes (1 à 3 et 4 à 6) encadrant ladite couche, lesdits champs électriques étant engendrés à partir de tensions continues de commande dites tensions vidéo, caractérisé en ce que :

les tensions vidéo de commande sont distribuées par les électrodes d'encadrement constituées d'une part par le premier réseau d'électrodes (1 à 3) et d'autre part par le second réseau d'électrodes (4 à 6) ;

les valeurs des tensions vidéo peuvent varier de 0 à une valeur maximale Vv ;

les sens desdits champs électriques de commande sont inversés en portant :

• pendant le temps d'une alternance, le potentiel de l'électrode chauffante (1 à 3) d'une zone à adresser à 0, tandis que le électrodes du second réseau (4 à 6) sont portées aux potentiels correspondant auxdites tensions vidéo ;

• pendant le temps de l'autre alternance, le potentiel de ladite électrode chauffante (1 à 3) à la valeur maximale Vv, tandis que les électrodes du second réseau (4 à 6) sont portées à des potentiels complémentaires par rapport à Vv de ceux de l'alternance précédente ; ce qui permet de supprimer toute composante continue des champs électriques appliqués à ladite couche en portant les électrodes d'application desdits champs à des potentiels tels que lesdits champs électriques de commande sont alternativement dirigés dans un sens puis dans le sens opposé.

2. Procédé de commande d'un dispositif de visualisation comprenant une couche de matériau actif (27) réagissant à un effet mixte thermique et électrique, le dispositif comportant un premier et un second réseau d'électrodes (22, 24), ces réseaux étant croisés pour permettre un adressage matriciel du dispositif, les électrodes (22) du premier réseau permettant de chauffer successivement des zones de ladite couche, des champs électriques de commande étant appliqués auxdites zones lors de leur refroidissement pendant une durée prédéterminées ($\tau'$) par des électrodes encadrant ladite couche, lesdits champs électriques étant engendrés à partir de tensions continues de commande dites tensions vidéo, caractérisé en ce que :

les tensions vidéo de commande sont distribuées par les électrodes d'encadrement constituées d'une part par une contre-électrode (26) et d'autre part par le second réseau d'électrodes (24) ;

les valeurs des tensions vidéo pouvant varier de 0 à une valeur maximale Vv ;

les sens desdits champs électriques de commande sont inversés en portant :

• pendant le temps d'une alternance, le potentiel de ladite contre-électrode (26) à 0, tandis que les électrodes du second réseau (24) sont portées aux potentiels correspondants auxdites tensions vidéo ;

• pendant le temps de l'autre alternance, le potentiel de ladite contre-électrode (26) à la valeur maximale Vv, tandis que les électrodes du second réseau (24) sont portées à des potentiels complémentaires par rapport à Vv de ceux de l'alternance précédente ; ce qui permet de supprimer toute composante continue des champs électriques appliqués à ladite couche, les électrodes d'application desdits champs sont portées à des potentiels tels que lesdits champs électriques de commande sont alternativement dirigés dans un sens puis dans le sens opposé.

3. Procédé de commande selon l'une des revendications 1 ou 2, caractérisé en ce que chacune desdites alternances à une durée moitié de ladite durée prédéterminée ($\tau'$).

4. Procédé de commande selon l'une des revendications 1 ou 2, caractérisé en ce que chacune desdites alternances dure le temps d'une image.

5. Dispositif de visualisation du type à adressage matriciel, comprenant une couche de matériau actif (27) réagissant à un effet mixte thermique et électrique, le dispositif comportant un premier et un second réseau d'électrodes (1 à 3 et 4 à 6 ; 22, 24), ces réseaux étant croisés pour permettre un adressage matriciel du dispositif, les électrodes (1 à 3 ; 22) du premier réseau permettant de chauffer successivement des zones de ladite couche, des champs électriques de commande étant appliqués auxdites zones lors de leur refroidissement pendant une durée prédéterminée ($\tau'$) par des électrodes (1 à 3 et 4 à 6) encadrant ladite couche, lesdits champs électriques étant engendrés à partir de tensions continues de commande dites tensions vidéo, caractérisé en ce qu'il utilise un procédé de commande selon l'une quelconque des revendications 1 à 4.

6. Dispositif de visualisation selon la revendication 5, caractérisé en ce que ledit matériau actif est un cristal liquide smectique.


**Claims**

1. A method for controlling a display device, comprising a layer of an active material (27) responsive to a combined thermal and electrical effect, and a first and a second set of electrodes (1 to 3 and 4 to 6), these sets being arranged crosswise for enabling a matrix addressing of the device, the electrodes (1 to 3) of the first set being conceived to successively heat up zones of said layer, electrical control fields being applied to said zones for a predetermined duration ($\tau'$) during their cooling down phase by electrodes (1 to 3 and 4 to 6) framing said layer, these electrical fields being produced by DC control voltages called video voltages, characterized in that :

the video control voltages are distributed by framing electrodes constituted on the one hand by the first set of electrodes (1 to 3) and on the other hand by the second set of electrodes (4 to 6),

the video voltages can assume values between 0 and a maximum value Vv,

the polarisations of said electrical control fields are inverted by applying

● during a first partial period a potential 0 to the heating electrode (1 to 3) corresponding to a zone to be addressed, whilst the potentials corresponding to said video voltages are applied to the electrodes of the second set (4 to 6),

during the other partial period, the maximum potential Vv to said heating electrode (1 to 3), whilst complementary potentials with respect to Vv to those of the preceding partial period are applied to the electrodes of the second set (4 to 6), this measure allowing any DC component of the electrical field applied to said layer to be suppressed by applying such potentials to the electrodes producing said fields that the electrical control fields are alternately polarized in one and then in the opposite direction.

2. A method for controlling a display device, comprising a layer of an active material (27) responsive to a combined thermal and electrical effect, and a first and a second set of electrodes (22, 24), these sets being arranged crosswise for enabling a matrix addressing of the device, the electrodes (22) of the first set being conceived to successively heat up zones of said layer, electrical control fields being applied to said zones for a predetermined duration ($\tau'$) during their cooling-down phase by electrodes (22, 24) framing said layer, these electrical fields being produced by DC control voltages called video voltages, characterized in that :

the video control voltages are distributed by framing electrodes constituted on the one hand by a counter electrode (26) and on the other hand by the second set of electrodes (24),

the video voltages can assume values between 0 and a maximum value Vv,

the polarisations of said electrical control fields are inverted by applying

● during a first partial period a potential 0 to the counter electrode (26) corresponding to a zone to be addressed, whilst the potentials corresponding to said video voltages are applied to the electrodes of the second set (24),

● during the other partial period, the maximum potential Vv to said counter electrode (26), whilst complementary potentials with respect to Vv to those of the preceding partial period are applied to the electrodes of the second set (24), this measure allowing any DC component of the electrical field applied to said layer to be suppressed by applying such potentials to the electrodes producing said fields that the electrical control fields are alternately polarized in one and then in the opposite direction.

3. A control method according to one of claims 1 or 2, characterized in that the duration of each partial period corresponds to half of said predetermined duration ($\tau'$).

4. A control method according to one of claims 1 or 2, characterized in that the duration of each partial period corresponds to one image duration.

5. A display device of the matrix addressing type, comprising a layer of an active material (27) responsive to a combined thermal and electrical effect, and a first and a second set of electrodes (1 to 3 and 4 to 6 ; 22, 24), these sets being arranged crosswise for enabling a matrix addressing of the device, the electrodes (1 to 3 ; 22) of the first set being conceived to successively heat up zones of said layer, electrical control fields being applied to said zones for a predetermined duration ($\tau'$) during their cooling-down phase by electrodes (1 to 3 and 4 to 6) framing said layer, these electrical fields being produced by DC control voltages called video voltages, characterized in that a control method according to any one of claims 1 to 4 is implemented.

6. A display device according to claim 5, characterized in that said active material is a smectic liquid cristal.

## Patentansprüche

1. Verfahren zur Steuerung einer Anzeigevorrichtung, die eine Schicht aus einem aktiven, auf einem gemischten Wärme- und Elektroeffekt ansprechenden Material (27) und eine erste sowie eine zweite Elektrodenschar (1 bis 3 und 4 bis 6) aufweist, wobei die beiden Scharen sich kreuzen, um eine Matrixadressierung der Vorrichtung zu erlauben, wobei die Elektroden (1 bis 3) der ersten Schar Zonen der Schicht nacheinander aufzuheizen erlauben und elektrische Steuerfelder während der Abkühlung der Zonen für einen vorgegebene Zeitdauer ($\tau'$) durch diese Schicht einrahmende Elektroden (1 bis 3 und 4 bis 6) an diese Zonen angelegt werden, und wobei diese elektrischen Felder mit Steuergleichspannungen erzeugt werden, die Videospannungen genannt werden, dadurch gekennzeichnet, daß :

die Videosteuerspannungen durch Rahmenelektroden verteilt werden, die zum einen von der ersten Schar von Elektroden (1 bis 3) und zum anderen von der zweiten Schar von Elektroden (4 bis 6) gebildet werden,

die Werte der Videospannungen zwischen 0 und einem Höchstwert Vv variieren können,

die Richtungen der elektrischen Steuerfelder umgekehrt werden,

● indem während einer Teilperiode das Potential der heizenden Elektrode (1 bis 3) einer zu adressierenden Zone 0 ist, während die Elektroden der zweiten Schar (4 bis 6) auf die Potentiale entsprechend den Videospannungen gebracht werden,

● und indem während der anderen Teilperiode das Potential dieser heizenden Elektrode (1 bis 3) auf den Höchstwert Vv gebracht ist, während die Elektroden des zweiten Netzes (4 bis 6) auf bezüglich Vv komplementäre Potentiale zu denen der vorhergehenden Periode gebracht sind, wodurch jede Gleichkomponente der an die Schicht angelegten elektrischen Felder unterdrückt wird, indem die Elektroden, über die die elektrischen Felder angelegt werden, auf solche Potentiale gebracht werden, daß die elektrischen Steuerfelder abwechselnd in einer Richtung und in der Gegenrichtung polarisiert sind.

2. Verfahren zur Steuerung einer Anzeigevorrichtung, die eine Schicht aus einem aktiven, auf einem gemischten Wärme- und Elektroeffekt ansprechenden Material (27) und eine erste sowie eine zweite Elektrodenschar (22, 24) aufweist, wobei die beiden Scharen sich kreuzen, um eine Matrixadressierung der Vorrichtung zu erlauben, wobei die Elektroden (22) der ersten Schar Zonen der Schicht nacheinander aufzuheizen erlauben und elektrische Steuerfelder während der Abkühlung der Zonen für einen vorgegebene Zeitdauer ($\tau'$) durch diese Schicht einrahmende Elektroden (22, 24) an diese Zonen angelegt werden, und wobei diese elektrischen Felder mit Steuergleichspannungen erzeugt werden, die Videospannungen genannt werden, dadurch gekennzeichnet, daß :

die Videosteuerspannungen durch Rahmenelektroden verteilt werden, die zum einen von einer Gegenelektrode (26) und zum anderen von der zweiten Schar von Elektroden (24) gebildet werden,

die Werte der Videospannungen zwischen 0 und einem Höchstwert Vv variieren können,

die Richtungen der elektrischen Steuerfelder umgekehrt werden,

● indem während einer Teilperiode das Potential der Gegenlektrode (26) 0 ist, während die Elektroden der zweiten Schar (24) auf die Potentiale entsprechend den Videospannungen gebracht werden,

● und indem während der anderen Teilperiode das Potential dieser Gegenelektrode (26) auf den Höchstwert Vv gebracht ist, während die Elektroden der zweiten Schar (24) auf bezüglich Vv komplementäre Potentiale zu denen der vorhergehenden Periode gebracht sind, wodurch jede Gleichkomponente der an die Schicht angelegten elektrischen Felder unterdrückt wird, indem die Elektroden, über die die elektrischen Felder angelegt werden, auf solche Potentiale gebracht werden, daß die elektrischen Steuerfelder abwechselnd in einer Richtung und in der Gegenrichtung polarisiert sind.

3. Steuerverfahren nach einem der Ansprüche 1 oder 2, dadurch gekennzeichnet, daß jede der Teilperioden aus der Hälfte der vorgegebenen Dauer ($\tau'$) besteht.

4. Steuerverfahren nach einem der Ansprüche 1 oder 2, dadurch gekennzeichnet, daß jede der Teilperioden einer Bildzeit entspricht.

5. Anzeigevorrichtung vom Typ einer Matrixadressierung, mit einer Schicht aus einem auf einen gemischten Wärme- und Elektroeffekt ansprechenden aktiven Material (27) und mit einer ersten sowie einer zweiten Elektrodenschar (1 bis 3 und 4 bis 6 ; 22, 24) wobei die beiden Scharen sich kreuzen, um eine Matrixadressierung der Vorrichtung zu erlauben, wobei die Elektroden (1 bis 3 ; 22) der ersten Schar Zonen der Schicht nacheinander aufzuheizen erlauben und elektrische Steuerfelder während der Abkühlung der Zonen für einen vorgegebene Zeitdauer ($\tau'$) durch diese Schicht einrahmende Elektroden (1 bis 3 und 4 bis 6) an diese Zonen angelegt werden, und wobei diese elektrischen Felder mit Steuergleichspannungnen erzeugt werden, die Videospannungen genannt werden, dadurch gekennzeichnet, daß ein Steuerverfahren nach einem beliebigen der Ansprüche 1 bis 4 verwendet wird.

6. Anzeigevorrichtung nach Anspruch 5, dadurch gekennzeichnet, daß das aktive Material ein smektischer Flüssigkristall ist.

0 152 708

# FIG.1

# FIG. 2

1

# FIG.3

# FIG.4

# FIG.5

# FIG.6

# FIG.7

# FIG.8

# FIG. 9

25

26

27

24

23

22

21

20

# FIG. 10

26

22

$$0 \quad \frac{V_V}{4} \quad \frac{V_V}{2} \quad \frac{3V_V}{4} \quad V_V$$

26

○Vv

22

$$V_V \quad \frac{3V_V}{4} \quad \frac{V_V}{2} \quad \frac{V_V}{4} \quad 0$$